(19) Europäisches Patentamt
European Patent Office
Office européen des brevets

(11) EP 3 227 373 B1

(12) **EUROPÄISCHE PATENTSCHRIFT**

(45) Veröffentlichungstag und Bekanntmachung des Hinweises auf die Patenterteilung:
**01.01.2020 Patentblatt 2020/01**

(21) Anmeldenummer: **15801775.6**

(22) Anmeldetag: **26.11.2015**

(51) Int Cl.:
***C08K 5/103*** $^{(2006.01)}$ ***C08K 5/521*** $^{(2006.01)}$

(86) Internationale Anmeldenummer:
**PCT/EP2015/077728**

(87) Internationale Veröffentlichungsnummer:
**WO 2016/087295 (09.06.2016 Gazette 2016/23)**

(54) **VERBESSERUNG DER FLIESSFÄHIGKEIT VON POLYCARBONATZUSAMMENSETZUNGEN**
IMPROVING THE FLOWABILITY OF POLYCARBONATE COMPOSITIONS
AMÉLIORATION DE LA FLUIDITÉ DE COMPOSITION DE POLYCARBONATE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.12.2014 EP 14195705**

(43) Veröffentlichungstag der Anmeldung:
**11.10.2017 Patentblatt 2017/41**

(73) Patentinhaber: **Covestro Deutschland AG**
**51373 Leverkusen (DE)**

(72) Erfinder:
- **WEHRMANN, Rolf**
**47800 Krefeld (DE)**
- **HEUER, Helmut, Werner**
**51371 Leverkusen (DE)**
- **BOUMANS, Anke**
**47574 Goch (DE)**

(74) Vertreter: **Levpat**
**c/o Covestro AG**
**Gebäude 4825**
**51365 Leverkusen (DE)**

(56) Entgegenhaltungen:
**EP-A2- 0 994 155**
**JP-A- S62 181 355**
**JP-A- 2011 256 359**
**US-A- 4 521 562**
**US-A1- 2002 049 268**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 227 373 B1

## Beschreibung

Die vorliegende Erfindung betrifft die Verbesserung der Fließfähigkeit von transparenten Polycarbonatzusammensetzungen.

Unter "Polycarbonatzusammensetzungen" im erfindungsgemäßen Sinne werden solche Zusammensetzungen verstanden, deren Hauptkomponente Polycarbonat ist. Hierbei werden unter "Polycarbonat" sowohl Homopolycarbonate als auch Copolycarbonate verstanden. Dabei können die Polycarbonate in bekannter Weise linear oder verzweigt sein. Erfindungsgemäß können auch Mischungen von Polycarbonaten verwendet werden.

"Transparent" im erfindungsgemäßen Sinn bedeutet, dass die Polycarbonat-Zusammensetzungen im Bereich von 400 nm bis 800 nm eine Transmission von mindestens 86 %, besonders bevorzugt mindestens 88 %, bestimmt nach ISO 13468 bei einer Dicke von 4 mm, aufweisen.

Insbesondere für dünnwandige Gehäuseteile, etwa von Ultrabooks oder Smartbooks, ist eine niedrige Schmelzeviskosität erforderlich, damit Bauteile mit gleichmäßiger Wandstärke realisiert werden können.

Herkömmlich wird zur Fließverbesserung Bisphenol A-Diphosphat (BDP) verwendet, und zwar in Mengen von bis zu mehr als 10 Gew.-%, um den gewünschten Effekt zu erzielen. Dadurch wird aber die Wärmeformbeständigkeit stark herabgesetzt.

Diglycerolester werden als Antistatika in transparenten Zusammensetzungen eingesetzt, beispielsweise beschrieben in JP 2011108435 A, JP 2010150457 A, JP 2010150458 A. Die JP 2009292962 A beschreibt spezielle Ausführungsformen, bei denen der Ester über mindestens 20 C-Atome verfügt. Die JP 2011256359 A beschreibt Diglycerolester-haltige flammgeschützte, UVstabilisierte, antistatische Zusammensetzungen. Die dort beschriebenen Zusammensetzungen weisen jedoch teilweise Schmelzeinstabilitäten und Polymerabbau unter Wärmeeinfluss auf. Die EP 0994155 beschreibt die Zugabe von Vollestern des Tetraglycerols zu einer Polycarbonatzusammensetzung.

Aufgabe der vorliegenden Erfindung war es somit insbesondere, die Fließfähigkeit von transparenten Polycarbonatzusammensetzungen bei einer guten Schmelzestabilität zu verbessern. Überraschenderweise wurde nun gefunden, dass diese Aufgabe durch die Verwendung von Diglycerolestern in Kombination mit mindestens einem Phosphat gelöst wird. Besonders überraschend war, dass die Diglycerolester auch zur Stabilisierung von Polycarbonat, welches durch das Schmelzeumesterungsverfahren hergestellt wurde, geeignet sind.

Die Polycarbonatzusammensetzungen, welchen Diglycerolester zugesetzt wurde, zeigen gute Schmelzestabilitäten mit verbesserten rheologischen Eigenschaften, und zwar eine höhere Schmelzevolumenfließrate (MVR), bestimmt nach DIN EN ISO 1133 (bei einer Prüftemperatur von 300 °C, Masse 1,2 kg), eine verbesserte Schmelzeviskosität, bestimmt nach ISO 11443, und verbesserte optische Eigenschaften, messbar an einem niedrigeren Yellowness Index (YI), bestimmt nach ASTM E 313, im Vergleich zu entsprechenden Zusammensetzungen, die ansonsten dieselben Komponenten außer den Diglycerolester enthalten. Dabei zeichnen sich die Zusammensetzungen weiterhin durch eine gute Wärmeformbeständigkeit aus, messbar anhand der Vicat-Erweichungstemperatur VST/B50, welche nach ISO 306 bestimmt wird.

Es wurde außerdem eine verbesserte Transmission bei einer Wellenlänge von 400 bis 800 nm, bestimmt nach ISO 13468 bei einer Dicke von 4 mm, beobachtet.

Die Polycarbonatzusammensetzungen enthalten bevorzugt 0,2 bis 1,0 Gew.-%, ganz besonders bevorzugt 0,3 bis 0,6 Gew.-% Diglycerolester.

Transparente Polycarbonatzusammensetzungen, in welchen durch die Zugabe von Diglycerolestern eine Schmelzestabilisierung erfolgt, welche sich insbesondere als Reduzierung der Schmelzeviskosität über den gesamten Scherbereich zeigt, enthalten bevorzugt

A) 20,0 Gew.-% bis 99,0 Gew.-% aromatisches Polycarbonat,

B) 0,01 Gew.-% bis 3,0 Gew.-% besonders bevorzugt 0,2 bis 1,0 Gew.-%, ganz besonders bevorzugt 0,3 bis 0,6 Gew.-% Diglycerolester,

C) 0,0 Gew.-% bis 1,0 Gew.-% Thermostabilisator,

D) 0,0 Gew.-% bis 10,0 Gew.-% weitere Additive.

Besonders bevorzugt bestehen solche Polycarbonatzusammensetzungen aus

A) 20,0 Gew.-% bis 99,0 Gew.-% aromatischem Polycarbonat,

B) 0,01 Gew.-% bis 3,0 Gew.-%, noch weiter bevorzugt 0,2 bis 1,0 Gew.-%, ganz besonders bevorzugt 0,3 bis 0,6 Gew.-% Diglycerolester und

C) optional bis zu 1,0 Gew.-% Thermostabilisator und

D) optional bis zu 10,0 Gew.-% eines weiteren Additivs oder mehrerer weiterer Additive aus der Gruppe der Antioxidantien, UV-Absorber, IR-Absorber, Antistatika, optischen Aufheller, Lichtstreumittel, Farbmittel aus der Gruppe der organischen Pigmente, der anorganischen Pigmente, Ruß und/oder Farbstoffe sowie der anorganischen Füllstoffe Titandioxid, Bariumsulfat und/oder Additiven zur Lasermarkierung.

In dieser Ausführungsform ist es besonders bevorzugt, dass D) für optional bis zu 10,0 Gew.-% eines weiteren Additivs oder mehrerer weiterer Additive aus der Gruppe der Antioxidantien, UV-Absorber, IR-Absorber, Antistatika, optischen Aufheller, Farbmittel aus der Gruppe der organischen Pigmente und/oder Farbstoffe und/oder Additiven zur Lasermarkierung steht.

Ganz besonders bevorzugt umfasst die Polycarbonatzusammensetzung nach Zugabe des Diglycerolesters und Phosphats die folgenden Bestandteile:

A) 95,0 Gew.-% bis 99,0 Gew.-%, besonders bevorzugt 75,0 Gew.-% bis 99,0 Gew.-%, ganz besonders bevorzugt 95,0 bis 99,0 Gew.-% aromatisches Polycarbonat,
B) 0,01 Gew.-% bis 3,0 Gew.-% Diglycerolester und
C) optional bis zu 1,0 Gew.-% Thermostabilisator und
D) bis zu 3,0 Gew.-% einem weiteren Additiv oder mehreren weiteren Additiven aus der Gruppe der Antioxidantien, UV-Absorber, IR-Absorber, Antistatika, optischen Aufheller, Lichtstreumittel, Farbmitteln aus der Gruppe der organischen Pigmente, der anorganischen Pigmente, Ruß und/oder Farbstoffe sowie der anorganischen Füllstoffe Titandioxid, Bariumsulfat und/oder der Additive zur Lasermarkierung, wobei als Additiv mindestens 0,001 bis 0,1 Gew.-% Phosphat enthalten sind,

wobei die Komponenten A) bis D) sich zu 100 Gew.-% addieren.

Ebenso bevorzugt umfasst die Polycarbonatzusammensetzung nach Zugabe des Diglycerolesters und Triisooctylphosphats die folgenden Bestandteile:

A) 95,0 Gew.-% bis 99,0 Gew.-%, besonders bevorzugt 75,0 Gew.-% bis 99,0 Gew.-%, ganz besonders bevorzugt 95,0 bis 99,0 Gew.-% aromatisches Polycarbonat,
B) 0,01 Gew.-% bis 3,0 Gew.-% Diglycerolester und
C) optional bis zu 1,0 Gew.-% Thermostabilisator und
D) bis zu 3,0 Gew.-% einem weiteren Additiv oder mehreren weiteren Additiven aus der Gruppe der Antioxidantien, UV-Absorber, IR-Absorber, Antistatika, optischen Aufheller, Lichtstreumittel, Farbmitteln aus der Gruppe der organischen Pigmente, der anorganischen Pigmente, Ruß und/oder Farbstoffe sowie der anorganischen Füllstoffe Titandioxid, Bariumsulfat und/oder der Additive zur Lasermarkierung, wobei als Additiv 0,001 bis 0,1 Gew.-% Triisooctylphosphat enthalten sind,

wobei die Komponenten A) bis D) sich zu 100 Gew.-% addieren.

Hierbei wird als Diglycerolester bevorzugt Diglycerolmonolaurylester eingesetzt.

Die Zusammensetzungen, in welchen auf erfindungsgemäße Weise die Fließfähigkeit verbessert wird, werden vorzugsweise zur Herstellung von Formteilen verwendet. Die Zusammensetzungen weisen bevorzugt eine Schmelze-Volumenfließrate (MVR) von 3 bis 60 $cm^3/10$ min, weiter bevorzugt von 6 bis 50 $cm^3/10$ min, bestimmt nach ISO 1133 (Prüftemperatur 300°C, Masse 1,2 kg), und eine Schlagzähigkeit nach Charpy, bestimmt nach DIN EN ISO 179 bei Raumtemperatur, von größer 60 $kJ/m^2$ auf.

Durch die Verwendung der Diglyerolester in transparenten Polycarbonatzusammensetzungen lassen sich außerdem die optischen Eigenschaften verbessern. Durch Zusatz der Diglycerolester werden die Transmission, bestimmt nach ISO 13468 bei 4 mm Dicke, erhöht und gleichzeitig der Yellowness-Index Y.I., bestimmt nach ASTM E 313 (Beobachter: 10° / Lichtart: D65, an einer Musterplatte von 4 mm Dicke), gesenkt. Dieser Effekt wird verstärkt durch die zusätzliche Zugabe von Phosphat, bevorzugt Triisooctylphosphat zur Zusammensetzung.

Die einzelnen Bestandteile der erfindungsgemäßen Zusammensetzungen sind im Folgenden noch näher erläutert:

## Komponente A

Die Herstellung der Polycarbonate, die in den Zusammensetzungen enthalten sind, welchen Diglycerolester zur Verbesserung der Fließfähigkeit zugesetzt wird, erfolgt in bekannter Weise aus Diphenolen, Kohlensäurederivaten, gegebenenfalls Kettenabbrechern und Verzweigern.

Einzelheiten der Herstellung von Polycarbonaten sind in vielen Patentschriften seit etwa 40 Jahren niedergelegt. Beispielhaft sei hier auf Schnell, "Chemistry and Physics of Polycarbonates", Polymer Reviews, Volume 9, Interscience Publishers, New York, London, Sydney 1964, auf D. Freitag, U. Grigo, P.R. Müller, H. Nouvertné, BAYER AG, "Polycarbonates" in Encyclopedia of Polymer Science and Engineering, Volume 11, Second Edition, 1988, Seiten 648-718 und schließlich auf U. Grigo, K. Kirchner und P.R. Müller "Polycarbonate" in Becker/Braun, Kunststoff-Handbuch, Band 3/1, Polycarbonate, Polyacetale, Polyester, Celluloseester, Carl Hanser Verlag München, Wien 1992, Seiten 117 299 verwiesen.

Die Herstellung aromatischer Polycarbonate erfolgt z.B. durch Umsetzung von Diphenolen mit Kohlensäurehalogeniden, vorzugsweise Phosgen, und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern und gegebenenfalls unter Verwendung von trifunktionellen oder mehr als trifunktionellen Verzweigern. Ebenso ist eine Herstellung über ein Schmelzepolymerisationsverfahren durch Umsetzung von Diphenolen mit beispielsweise Diphenylcarbonat möglich.

Für die Herstellung der Polycarbonate geeignete Diphenole sind beispielsweise Hydrochinon, Resorcin, Dihydroxydiphenyle, Bis-(hydroxyphenyl)-alkane, Bis-(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, $\alpha$-$\alpha$'-Bis-(hydroxyphenyl)-diisopropylbenzole, Phthalimidine abgeleitet von Isatin- oder Phenolphthaleinderivaten sowie deren kernalkylierte, kernarylierte und kernhalogenierte Verbindungen.

Bevorzugte Diphenole sind 4,4'-Dihydroxydiphenyl, 2,2-Bis-(4-hydroxyphenyl)-propan (Bisphenol A), 2,4-Bis-(4-hydroxyphenyl)-2-methylbutan, 1,1-Bis-(4-hydroxyphenyl)-p-diisopropylbenzol, 2,2-Bis-(3-methyl-4-hydroxyphenyl)-propan, Dimethyl-Bisphenol A, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-p-diisopropylbenzol und 1,1-Bis-(4-hydroxyphenyl)-3,3,5-trimethylcyclohexan.

Besonders bevorzugte Diphenole sind 2,2-Bis-(4-hydroxyphenyl)-propan (Bisphenol A), 2,2-Bis-(3,5-dimethyl-4-hydroxyphenyl)-propan, 1,1-Bis-(4-hydroxyphenyl)-cyclohexan, 1,1-Bis-(4-hydroxyphenyl)-3,3,5-trimethylcyclohexan und Dimethyl-Bisphenol A.

Diese und weitere geeignete Diphenole sind z.B. in US-A 3 028 635, US-A 2 999 825, US-A 3 148 172, US-A 2 991 273, US-A 3 271 367, US-A 4 982 014 und US-A 2 999 846, in DE-A 1 570 703, DE-A 2063 050, DE-A 2 036 052, DE-A 2 211 956 und DE-A 3 832 396, in FR-A 1 561 518, in der Monographie "H. Schnell, Chemistry and Physics of Polycarbonates, Interscience Publishers, New York 1964" sowie in JP-A 62039/1986, JP-A 62040/1986 und JP-A 105550/1986 beschrieben.

Im Fall der Homopolycarbonate wird nur ein Diphenol eingesetzt, im Fall der Copolycarbonate werden mehrere Diphenole eingesetzt.

Geeignete Kohlensäurederivate sind beispielsweise Phosgen oder Diphenylcarbonat.

Geeignete Kettenabbrecher, die bei der Herstellung der Polycarbonate eingesetzt werden können, sind Monophenole. Geeignete Monophenole sind beispielsweise Phenol selbst, Alkylphenole wie Kresole, p-tert.-Butylphenol, Cumylphenol sowie deren Mischungen.

Bevorzugte Kettenabbrecher sind die Phenole, welche ein- oder mehrfach mit $C_1$- bis $C_{30}$-Alkylresten, linear oder verzweigt, bevorzugt unsubstituiert, oder mit tert-Butyl substituiert sind. Besonders bevorzugte Kettenabbrecher sind Phenol, Cumylphenol und/oder p-tert-Butylphenol.

Die Menge an einzusetzendem Kettenabbrecher beträgt bevorzugt 0,1 bis 5 Mol-%, bezogen auf Mole an jeweils eingesetzten Diphenolen. Die Zugabe der Kettenabbrecher kann vor, während oder nach der Umsetzung mit einem Kohlensäurederivat erfolgen.

Geeignete Verzweiger sind die in der Polycarbonatchemie bekannten tri- oder mehr als trifunktionellen Verbindungen, insbesondere solche mit drei oder mehr als drei phenolischen OH-Gruppen.

Geeignete Verzweiger sind beispielsweise 1,3,5-Tri-(4-hydroxyphenyl)-benzol, 1,1,1-Tri-(4-hydroxyphenyl)-ethan, Tri-(4-hydroxyphenyl)-phenylmethan, 2,4-Bis-(4-hydroxyphenylisopropyl)-phenol, 2,6-Bis-(2-hydroxy-5'-methyl-benzyl)-4-methylphenol, 2-(4-Hydroxyphenyl)-2-(2,4-dihydroxyphenyl)-propan, Tetra-(4-hydroxyphenyl)-methan, Tetra-(4-(4-hydroxyphenylisopropyl)-phenoxy)-methan und 1,4-Bis-((4',4"-dihydroxytriphenyl)-methyl)-benzol und 3,3-Bis-(3-methyl-4-hydroxyphenyl)-2-oxo-2,3-dihydroindol.

Die Menge der gegebenenfalls einzusetzenden Verzweiger beträgt bevorzugt 0,05 Mol-% bis 2,00 Mol-%, bezogen auf Mole an jeweils eingesetzten Diphenolen.

Die Verzweiger können entweder mit den Diphenolen und den Kettenabbrechern in der wässrig alkalischen Phase vorgelegt werden oder in einem organischen Lösungsmittel gelöst vor der Phosgenierung zugegeben werden. Im Fall des Umesterungsverfahrens werden die Verzweiger zusammen mit den Diphenolen eingesetzt.

Besonders bevorzugte Polycarbonate sind das Homopolycarbonat auf Basis von Bisphenol A, das Homopolycarbonat auf Basis von 1,1-Bis-(4-hydroxyphenyl)-3,3,5-trimethylcyclohexan und die Copolycarbonate auf Basis der beiden Monomere Bisphenol A und 1,1-Bis-(4-hydroxyphenyl)-3,3,5-trimethylcyclohexan.

Zur Einarbeitung von Additiven wird die Komponente A bevorzugt in Form von Pulvern, Granulaten oder aus Gemischen aus Pulvern und Granulaten eingesetzt.

Als Polycarbonat kann auch eine Mischung aus verschiedenen Polycarbonaten eingesetzt werden, z.B. aus den Polycarbonaten A1 und A2:

Die Menge des aromatischen Polycarbonats A1 beträgt, bezogen auf die Gesamtmenge an Polycarbonat, 25,0 bis 85,0 Gew.-%, bevorzugt 28,0 bis 84,0 Gew.-%, besonders bevorzugt 30,0 bis 83,0 Gew.-%, wobei dieses aromatische Polycarbonat auf Basis von Bisphenol A mit einer bevorzugten Schmelze-Volumenfließrate MVR von 7 bis 15 $cm^3$/10 min, weiter bevorzugt mit einer Schmelze-Volumenfließrate MVR von 8 bis 12 $cm^3$/10 min und besonders bevorzugt mit einer Schmelze-Volumenfließrate MVR von 8 bis 11 $cm^3$/10 min, bestimmt gemäß ISO 1133 (Prüftemperatur 300°C, Masse 1,2 kg), ist.

Die Menge des pulverförmigen aromatischen Polycarbonats A2 beträgt, bezogen auf die Gesamtmenge an Polycarbonat, 3,0 bis 12,0 Gew.-%, bevorzugt 4,0 bis 11,0 Gew.-%, besonders bevorzugt 3,0 bis 10,0 Gew.-%, wobei dieses aromatische Polycarbonat bevorzugt auf Basis von Bisphenol A mit einer bevorzugten Schmelze-Volumenfließrate MVR von 3 bis 8 $cm^3$/10 min, weiter bevorzugt mit einer Schmelze-Volumenfließrate MVR von 4 bis 7 $cm^3$/10 min, und besonders bevorzugt mit einer Schmelze-Volumenfließrate MVR von 6 $cm^3$/10 min, bestimmt gemäß ISO 1133 (Prüftemperatur 300°C, Masse 1,2 kg), ist.

In einer bevorzugten Ausführungsform handelt es sich bei dem erfindungsgemäßen Polycarbonat nicht um Copolycarbonate enthaltend Monomereinheiten ausgewählt aus der Gruppe, bestehend aus den Struktureinheiten der allgemeinen Formeln

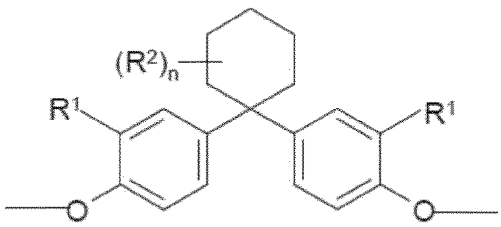

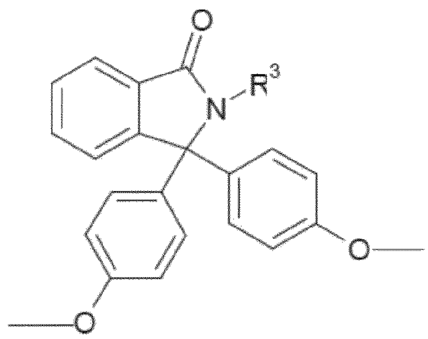

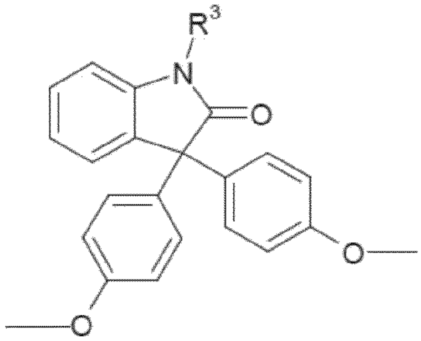

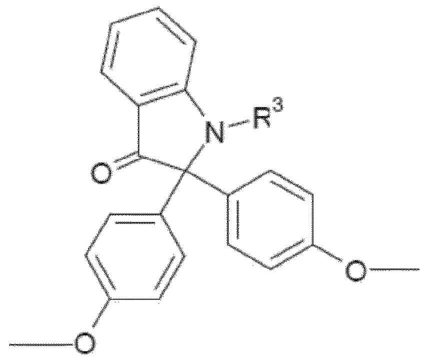

in denen

$R^1$ für Wasserstoff oder C1-C4-Alkyl,

$R^2$ für C1-C4-Alkyl,

n für 0, 1, 2 oder 3 und

$R^3$ für C1-C4-Alkyl, Aralkyl oder Aryl steht

oder deren Blends.

**Komponente B**

Die als Fließverbesser eingesetzten Diglycerolester sind Ester von Carbonsäuren mit Diglycerol. Dabei sind Ester auf Basis verschiedener Carbonsäuren geeignet. Auch können unterschiedliche Isomere von Diglycerol Basis für die Ester bilden. Neben Monoestern können auch Mehrfachester von Diglycerol eingesetzt werden. Anstelle von Reinverbindungen können auch Gemische verwendet werden.

Isomere von Diglycerol, welche die Basis für die erfindungsgemäß eingesetzten Diglycerolester bilden, sind die folgenden:

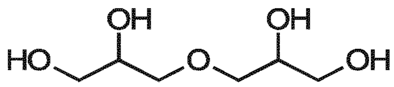
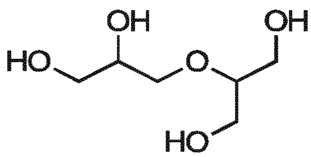
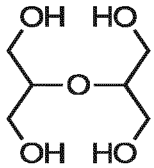

α,α-Diglycerol α,β-Diglycerol β,β-Diglycerol

Für die erfindungsgemäß verwendeten Diglycerolester können solche Isomere dieser Formeln eingesetzt werden, die einfach oder mehrfach verestert sind. Als Fließhilfsmittel einsetzbare Gemische bestehen aus den Diglyceroledukten sowie daraus abgeleiteten Esterendprodukten, beispielweise mit den Molekulargewichten 348 g/mol (Monolaurylester) oder 530 g/mol (Dilaurylester).

Die erfindungsgemäß in der Zusammensetzung enthaltenen Diglycerolester leiten sich vorzugsweise von gesättigten oder ungesättigten Monocarbonsäuren mit einer Kettenlänge von 6 bis 30 C-Atomen ab. Geeignete Monocarbonsäuren sind beispielsweise Caprylsäure ($C_7H_{15}COOH$, Octansäure), Caprinsäure ($C_9H_{19}COOH$, Decansäure), Laurinsäure ($C_{11}H_{23}COOH$, Dodecansäure), Myristinsäure ($C_{13}H_{27}COOH$, Tetradecansäure), Palmitinsäure ($C_{15}H_{31}COOH$, Hexadecansäure), Margarinsäure ($C_{16}H_{33}COOH$, Heptadecansäure), Stearinsäure ($C_{17}H_{35}COOH$, Octadecansäure), Arachinsäure ($C_{19}H_{39}COOH$, Eicosansäure), Behensäure ($C_{21}H_{43}COOH$, Docosansäure), Lignocerinsäure ($C_{23}H_{47}COOH$, Tetracosansäure), Palmitoleinsäure ($C_{15}H_{29}COOH$, (9Z)-Hexadeca-9-ensäure), Petroselinsäure ($C_{17}H_{33}COOH$, (6Z)-Octadeca-6-ensäure), Ölsäure ($C_{17}H_{33}COOH$, (9Z)-Octadeca-9-ensäure), Elaidinsäure ($C_{17}H_{33}COOH$, (9E)-Octadeca-9-ensäure), Linolsäure ($C_{17}H_{31}COOH$, (9Z,12Z)-Octadeca-9,12-diensäure), alpha- oder gamma-Linolensäure ($C_{17}H_{29}COOH$, (9Z,12Z,15Z)-Octadeca-9,12,15-triensäure und (6Z,9Z,12Z)-Octadeca-6,9,12-triensäure), Arachidonsäure ($C_{19}H_{31}COOH$, (5Z,8Z,11Z,14Z)-Eicosa-5,8,11,14-tetraensäure), Timnodonsäure ($C_{19}H_{29}COOH$, (5Z,8Z,11Z,14Z,17Z)-Eicosa-5,8,11,14,17-pentaensäure) und Cervonsäure ($C_{21}H_{31}COOH$, (4Z,7Z,10Z,13Z,16Z,19Z)-Docosa-4,7,10,13,16,19-hexaensäure). Besonders bevorzugt sind Laurinsäure, Palmitinsäure, Stearinsäure und/oder Ölsäure.

Als Diglycerolester ist besonders bevorzugt mindestens ein Ester der Formel (I)

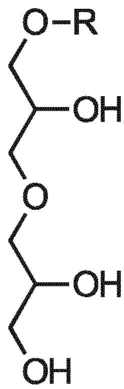

(I)

mit R = $COC_nH_{2n+1}$ und/oder R = COR',
wobei n eine ganze Zahl ist und R' ein verzweigter Alkylrest oder ein verzweigter oder unverzweigter Alkenylrest ist und $C_nH_{2n+1}$ ein aliphatischer, gesättigter linearer Alkylrest ist,
enthalten.

Dabei ist n bevorzugt eine ganze Zahl von 6-24, so dass $C_nH_{2n+1}$ beispielsweise n-Hexyl, n-Heptyl, n-Octyl,

n-Nonyl, n-Decyl, n-Dodecyl, n-Tridecyl, n-Tetradecyl, n-Hexadecyl oder n-Octadecyl ist. Weiter bevorzugt ist n = 8 bis 18, besonders bevorzugt 10 bis 16, ganz besonders bevorzugt 12 (Diglycerolmonolaurat-Isomer mit dem Molekulargewicht 348 g/mol, welches als Hauptprodukt in einem Gemisch besonders bevorzugt ist). Die vorgenannten Estergruppierungen liegen erfindungsgemäß bevorzugt auch bei den anderen Isomeren des Diglycerols vor.

Es kann sich demzufolge auch um ein Gemisch verschiedener Diglycerolester handeln.

Bevorzugt eingesetzte Diglycerolester weisen einen HLB-Wert von mindestens 6, besonders bevorzugt 6 bis 12 auf, wobei unter dem HLB-Wert die sog. "hydrophilic-lipophilic balance" verstanden wird, die gemäß der Methode nach Griffin wie folgt berechnet wird:

$$HLB = 20 \text{ x } (1 - M_{lipophil}/M),$$

wobei $M_{lipophil}$ die Molmasse des lipophilen Anteils des Diglycerolesters ist und M die Molmasse des Diglycerolesters.

Die Menge an Diglycerolester beträgt 0,01 bis 3,0 Gew.-%, bevorzugt 0,10 bis 2,0 Gew.-%, weiter bevorzugt 0,15 bis 1,50 Gew.-% und besonders bevorzugt 0,20 bis 1,0 Gew.-%, ganz besonders bevorzugt 0,3 bis 0,6 Gew.-%.

**Komponente** C

Als Thermostabilisatoren eignen sich bevorzugt Triphenylphosphin, Tris-(2,4-di-tert-butylphenyl)phosphit (Irgafos® 168), Tetrakis-(2,4-di-tert-butylphenyl)-[1,1-biphenyl]-4,4'-diylbisphosphonit, Octadecyl-3-(3,5-di-tert-butyl-4-hydroxyphenyl)-propionat (Irganox® 1076), Bis-(2,4-dicumylphenyl)-pentaerythritoldiphosphit (Doverphos® S-9228), Bis-(2,6-di-tert-butyl-4-methylphenyl)-pentaerythritoldiphosphit (ADK STAB PEP-36). Sie werden allein oder im Gemisch (z. B. Irganox® B900 (Gemisch aus Irgafos® 168 und Irganox® 1076 im Verhältnis 1:3) oder Doverphos® S-9228 mit Irganox® B900 bzw. Irganox® 1076) eingesetzt. Die Thermostabilisatoren werden bevorzugt in Mengen von 0,003 bis 0,2 Gew.-% eingesetzt.

**Komponente D**

Zusätzlich sind optional bis zu 10,0 Gew.-%, bevorzugt 0,10 bis 8,0 Gew.-%, besonders bevorzugt 0,2 bis 3,0 Gew.-% sonstige übliche Additive ("weitere Additive") enthalten. Die Gruppe der weiteren Additive umfasst keine Thermostabilisatoren, da diese bereits als Komponente C beschrieben sind.

Solche Additive, wie sie üblicherweise bei Polycarbonaten zugesetzt werden, sind insbesondere die in EP-A 0 839 623, WO-A 96/15102, EP-A 0 500 496 oder "Plastics Additives Handbook", Hans Zweifel, 5th Edition 2000, Hanser Verlag, München beschriebenen Antioxidantien, UV-Absorber, IR-Absorber, Antistatika, optischen Aufheller, Lichtstreumittel, Farbmittel wie organische Pigmente, auch anorganischen Pigmente, Ruß und/oder Farbstoffe, anorganische Füllstoffe wie Titandioxid, Bariumsulfat und/oder Additive zur Lasermarkierung in den für Polycarbonat üblichen Mengen. Diese Additive können einzeln oder auch im Gemisch zugesetzt werden. Bevorzugt handelt es sich dabei um Antioxidantien, UV-Absorber, IR-Absorber, Antistatika, optischen Aufheller, Farbmittel wie organische Pigmente und/oder Farbstoffe und/oder Additive zur Lasermarkierung in den für Polycarbonat üblichen Mengen.

Bevorzugte Additive sind spezielle UV-Stabilisatoren, die eine möglichst geringe Transmission unterhalb 400 nm und eine möglichst hohe Transmission oberhalb von 400 nm besitzen. Für den Einsatz in der erfindungsgemäßen Zusammensetzung besonders geeignete Ultraviolett-Absorber sind Benzotriazole, Triazine, Benzophenone und/oder arylierte Cyanoacrylate.

Besonders geeignete Ultraviolett-Absorber sind Hydroxy-Benzotriazole, wie 2-(3',5'-Bis-(1,1-dimethylbenzyl)-2'-hydroxy-phenyl)-benzotriazol (Tinuvin® 234, BASF, Ludwigshafen), 2-(2'-Hydroxy-5'-(tert.-octyl)-phenyl)-benzotriazol (Tinuvin® 329, BASF, Ludwigshafen),), Bis-(3-(2H-benztriazolyl)-2-hydroxy-5-tert.-octyl)methan (Tinuvin® 360, BASF, Ludwigshafen), 2-(4,6-Diphenyl-1,3,5-triazin-2-yl)-5-(hexyloxy)-phenol (Tinuvin® 1577, BASF, Ludwigshafen), sowie Benzophenone wie 2,4-Dihydroxybenzophenon (Chimasorb® 22 , BASF, Ludwigshafen) und 2-Hydroxy-4-(octyloxy)-benzophenon (Chimassorb® 81, BASF, Ludwigshafen), 2,2-Bis[[(2-cyano-1-oxo-3,3-diphenyl-2-propenyl)oxy]-methyl]-1,3-propandiylester (9CI) (Uvinul® 3030, BASF AG Ludwigshafen), 2-[2-Hydroxy-4-(2-ethylhexyl)oxy]phenyl-4,6-di(4-phenyl)phenyl-1,3,5-triazine (Tinuvin® 1600, BASF, Ludwigshafen), Tetraethyl-2,2'-(1,4-phenylen-dimethyliden)-bismalonat (Hostavin® B-Cap, Clariant AG) oder N-(2-Ethoxyphenyl)-N'-(2-ethylphenyl)-ethandiamid (Tinuvin® 312, CAS-Nr. 23949-66-8, BASF, Ludwigshafen).

Besonders bevorzugte spezielle UV-Stabilisatoren sind Tinuvin® 360, Tinuvin® 329 und/oder Tinuvin® 312, ganz besonders bevorzugt sind Tinuvin® 329 und Tinuvin® 312.

Es können auch Mischungen dieser Ultraviolett-Absorber eingesetzt werden.

Bevorzugt enthält die Zusammensetzung Ultraviolett-Absorber in einer Menge bis 0,8 Gew.-%, bevorzugt 0,05 Gew.-% bis 0,5 Gew.-% , weiter bevorzugt 0,1 Gew.-% bis 0,4 Gew.-%, bezogen auf die Gesamtzusammensetzung.

Die erfindungsgemäßen Zusammensetzungen können auch Phosphate oder Sulfonsäureester als Umesterungsstabilisatoren enthalten. Erfindungsgemäß ist mindestens ein Phosphat enthalten. Dabei ist das Phosphat bevorzugt ein organisches Phosphat. Besonders bevorzugt ist Triisooctylphosphat als Stabilisator enthalten. Es hat sich überraschenderweise herausgestellt, dass durch die Verwendung einer Kombination mindestens eines Diglycerolesters mit einem Phosphat, bevorzugt Triisooctylphosphat Polycarbonatzusammensetzungen erhalten werden können, welche neben der verbesserten Fließfähigkeit auch verbesserte optische Eigenschaften aufweisen. Insbesondere können so Zusammensetzungen erhalten werden, welche eine erhöhte Transmission, niedrigere Trübung und geringeren Y.I. aufweisen.

Dabei sind die optischen Eigenschaften bei der Verwendung der Kombination insbesondere verbessert gegenüber der Verwendung der Einzelkomponenten (synergistischer Effekt). Bevorzugt werden 0,001 bis 0,1, besonders bevorzugt 0,002 bis 0,08 und ganz besonders bevorzugt 0,005 bis 0,05 Gew.-% Phosphat, bevorzugt Triisooctylphosphat in Bezug auf die Gesamtzusammensetzung verwendet.

Das Phosphat, bevorzugt Triisooctylphosphat wird erfindungsgemäß zur Komponente D) gezählt (meist als D-2 bezeichnet). Sie ist jedoch nicht optional. Sämtliche Beschreibungen in Bezug auf Komponente D), welche optional sind, beziehen sich in diesem Fall auf alle anderen als D) bezeichneten Komponenten bis auf das Phosphat, bevorzugt Triisooctylphosphat, welches zwingend ist.

Die Zusammensetzung ist bevorzugt frei von Entformungsmitteln, z.B. GMS. Der Diglycerolester selbst wirkt als Entformungsmittel.

Besonders bevorzugt ist mindestens ein Thermostabilisator (Komponente C) und als weiteres Additiv (Komponente D) ein Umesterungsstabilisator, Phosphat, bevorzugt Triisooctylphosphat, enthalten.

Die Herstellung der Polycarbonat-Zusammensetzungen, enthaltend die Komponenten A bis D, erfolgt mit gängigen Einarbeitungsverfahren durch Zusammenfuhrung, Vermischen und Homogenisieren der einzelnen Bestandteile, wobei insbesondere die Homogenisierung bevorzugt in der Schmelze unter Einwirkung von Scherkräften stattfindet. Gegebenenfalls erfolgt das Zusammenführen und Vermischen vor der Schmelzehomogenisierung unter Verwendung von Pulvervormischungen.

Es können auch Vormischungen aus Granulaten oder Granulaten und Pulvern mit den Komponenten B bis D verwendet werden.

Es können auch Vormischungen verwendet werden, die aus Lösungen der Mischungskomponenten in geeigneten Lösungsmitteln hergestellt worden sind, wobei gegebenenfalls in Lösung homogenisiert wird und das Lösungsmittel anschließend entfernt wird.

Insbesondere können hierbei die Komponenten B bis D der erfindungsgemäßen Zusammensetzung durch bekannte Verfahren oder als Masterbatch in das Polycarbonat eingebracht werden.

Die Verwendung von Masterbatchen ist zum Einbringen der Komponenten B bis D, einzeln oder in Mischung, bevorzugt.

In diesem Zusammenhang kann die erfindungsgemäße Zusammensetzung in üblichen Vorrichtungen wie Schneckenextrudern (zum Beispiel Zweischneckenextruder, ZSK), Knetern, Brabender- oder Banbury-Mühlen zusammengeführt, vermischt, homogenisiert und anschließend extrudiert werden. Nach der Extrusion kann das Extrudat abgekühlt und zerkleinert werden. Es können auch einzelne Komponenten vorgemischt werden und dann können die restlichen Ausgangsstoffe einzeln und/oder ebenfalls gemischt hinzugegeben werden.

Die Zusammenführung und Durchmischung einer Vormischung in der Schmelze kann auch in der Plastifiziereinheit einer Spritzgussmaschine erfolgen. Hierbei wird die Schmelze im anschließenden Schritt direkt in einen Formkörper überführt.

Die Herstellung der Kunststoffformteile erfolgt vorzugsweise durch Spritzguss.

Die Polycarbonatzusammensetzungen sind zur Herstellung von Mehrschichtsystemen geeignet. Hierbei wird die Polycarbonatzusammensetzung in einer oder mehreren Schicht(en) auf einen geformten Gegenstand aus einem Kunststoff aufgebracht. Das Aufbringen kann zugleich mit oder unmittelbar nach der Formgebung des Formkörpers geschehen, zum Beispiel durch Hinterspritzen einer Folie, Coextrusion oder Mehrkomponentenspritzguss. Das Aufbringen kann aber auch auf den fertig geformten Grundkörper geschehen, z.B. durch Lamination mit einem Film, Umspritzen eines vorhandenen Formkörpers oder durch Beschichtung aus einer Lösung.

Die Polycarbonat- Zusammensetzungen, denen Diglycerolester zur Fließverbesserung zugesetzt ist, sind zur Herstellung von Bauteilen im Automotive-Bereich, etwa für Blenden, Scheinwerferabdeckungen oder -rahmen, Linsen und Kollimatoren oder Lichtleiter sowie zur Herstellung von Rahmenbauteilen im EE (Elektro/Elektronik)- und IT-Bereich geeignet, insbesondere für Anwendungen, die hohe Anforderungen an die Fließfähigkeit stellen (Dünnschichtanwendungen). Solche Anwendungen sind beispielsweise Bildschirme oder Gehäuse, etwa für Ultrabooks oder Rahmen für LED-Display-Technologien, z.B. OLED-Displays oder LCD-Displays oder auch für E-Ink-Geräte. Weitere Anwendungsfelder sind Gehäuseteile von mobilen Kommunikationsendgeräten, wie Smartphones, Tablets, Ultrabooks, Notebooks oder Laptops, aber auch Navigationsgeräte, Smartwatches oder Herzfrequenzmesser, sowie Elektroanwendungen in Dünnwand-Ausfertigungen, z. B. Haus- und Industrie-Vernetzungseinheiten und Smart Meter Gehäusebauteile.

## Beispiele

### 1. Beschreibung der Rohstoffe und Prüfmethoden

Die in den folgenden Beispielen beschriebenen Polycarbonatzusammensetzungen wurden auf einem Extruder ZE 25 der Fa. Berstorff mit einem Durchsatz von 10 kg/Std. durch Compoundierung hergestellt. Die Schmelzetemperatur betrug 275 °C.

Komponente A-1: Lineares Polycarbonat auf Basis von Bisphenol A mit einer Schmelze-Volumenfließrate MVR von 12,5 $cm^3$/10 min (gemäß ISO 1133, bei einer Prüftemperatur 300°C und 1,2 kg Belastung), enthaltend 250 ppm Triphenylphosphin als Komponente C (Thermostabilisator), hergestellt durch Zugabe über einen Seitenextruder.

Komponente A-2: Lineares Polycarbonat in Pulverform auf Basis von Bisphenol A mit einer Schmelze-Volumenfließrate MVR von 6 $cm^3$/10 min (gemäß ISO 1133, bei einer Prüftemperatur von 300°C und 1,2 kg Belastung).

Komponente A-3: UV-geschütztes BPA-Polycarbonat (Makrolon® AL 2447) der Firma Bayer MaterialScience mit einer Schmelze-Volumenfließrate MVR von 18 $cm^3$/10 min (gemäß ISO 1133, bei einer Prüftemperatur von 300°C und 1,2 kg Belastung).

Komponente A-4: Schmelze-BPA-Polycarbonat (Makrolon® 2600) der Firma Bayer MaterialScience mit einer Schmelze-Volumenfließrate MVR von 12 $cm^3$/10 min (gemäß ISO 1133, bei einer Prüftemperatur von 300°C und 1,2 kg Belastung).

Komponente B: Poem DL-100 (Diglycerolmonolaurat) der Fa. Riken Vitamin als Fließhilfsmittel.

Komponente C: Triphenylphosphin (TPP) der Firma BASF SE als Thermostabilisator.

Komponente D-1: Pentaerythrittetrastearat (PETS) der Firma Emery Oleochemicals.

Komponente D-2: Triisooctylphosphat (TOF) der Firma Lanxess AG als Umesterungsstabilisator.

Die Kerbschlagzähigkeit nach Charpy wurde nach ISO 7391/180A an einseitig angespritzten Prüfstäben der Dimension 80 x 10 x 3 mm bei Raumtemperatur gemessen.
Die Vicat-Erweichungstemperatur VST/B50 als Maß für die Wärmeformbeständigkeit wurde gemäß ISO 306 an Prüfkörpern der Abmessung 80 x 10 x 4 mm mit einer Stempellast von 50 N und einer Aufheizgeschwindigkeit von 50°C/h mit dem Gerät Coesfeld Eco 2920 der Firma Coesfeld Materialtest bestimmt.
Die Bestimmung des Schmelze-Volumenfließrate (MVR) erfolgte nach ISO 1133 (bei einer Prüftemperatur von 300 °C, Masse 1,2 kg) mit dem Gerät Zwick 4106 der Firma Zwick Roell.
Die Bestimmung der Schmelzeviskositäten erfolgte nach ISO 11443 (Kegelplatteanordnung).
Der Yellowness Index (Y.I.) wurde gemäß ASTM E 313 (Beobachter: 10° / Lichtart: D65) an Musterplatten mit einer Schichtdicke von 4 mm bestimmt.
Die Transmission im VIS-Bereich des Spektrum (400 nm bis 800 nm) wurde nach ISO 13468 bei einer Schichtdicke von 4 mm bestimmt.
Die Trübung wurde bestimmt nach ASTM D1003 bei einer Schichtdicke von 4 mm.

### 2. Zusammensetzungen

**Tabelle 1: Vergleichsbeispiele 1V bis 7V**

| | | 1V | 2V | 3V | 4V | 5V | 6V | 7V |
|---|---|---|---|---|---|---|---|---|
| A-1 | Gew.-% | 93 | 93 | 93 | 93 | 93 | 93 | 93 |
| A-2 | Gew.-% | 7 | 6,9 | 6,8 | 6,6 | 6,9 | 6,8 | 6,6 |
| D-1 | Gew.-% | - | 0,1 | 0,2 | 0,4 | - | - | - |
| B | Gew.-% | - | - | - | - | 0,1 | 0,2 | 0,4 |

(fortgesetzt)

| | | 1V | 2V | 3V | 4V | 5V | 6V | 7V |
|---|---|---|---|---|---|---|---|---|
| | | | | | | | | |
| eta rel Granulat | | 1,280 | | | | 1,281 | 1,280 | |
| eta rel Prüfkörper | | 1,278 | | | | 1,277 | 1,276 | |
| MVR 7'/300 °C/1,2 kg | ml/10 min | 12,2 | 12,4 | 12,6 | 13,0 | 14,5 | 21,5 | 26,5 |
| MVR 20'/300 °C/1,2 kg | ml/10 min | 12,2 | 12,3 | 12,4 | 13,1 | 15,9 | 22,0 | 28,8 |
| Δ MVR 20'/MVR 7' | | 0,0 | -0,1 | -0,2 | 0,1 | 1,4 | 0,5 | 2,3 |
| Vicat VSTB 50 | °C | 146,6 | 146,1 | 144,8 | 143,6 | 145,3 | 144,7 | 143,5 |
| Reibungskoeffizient Rz 1,5 | | | | | | | | |
| Gleitreibung | | 0,52 | 0,39 | 0,33 | 0,29 | 0,39 | 0,34 | 0,32 |
| Haftreibung | | 0,58 | 0,42 | 0,39 | 0,35 | 0,36 | 0,39 | 0,39 |
| Kerbschlagzähigkeit ISO 7391/180A (3 mm) | | | | | | | | |
| bei 23 °C | $kJ/m^2$ | 63 zäh | 64 zäh | 63 zäh | 64 zäh | 64 zäh | 65 zäh | 64 zäh |
| bei 0 °C | $kJ/m^2$ | 58 zäh | 57 zäh | 58 zäh | 58 zäh | - | 58 zäh | 57 zäh |
| Optik 4 mm | | | | | | | | |
| Transmission | % | 87,61 | 88,76 | 88,92 | 89,05 | 89,07 | 89,11 | 89,12 |
| Trübung | % | 1,09 | 0,62 | 0,61 | 0,53 | 0,56 | 0,52 | 0,55 |
| Y.I. | | 2,47 | 2,17 | 2,21 | 2,13 | 2,11 | 2,14 | 2,21 |

In Tabelle 1 sind zu den Zusammensetzungen 5V, 6V und 7V wichtige Eigenschaften angegeben. Dem sind die Vergleichsbeispiele 1V bis 4V gegenübergestellt. Aus der Tabelle ist zu erkennen, dass die Zusammensetzungen gemäß den Vergleichsbeispielen, welche keinen Diglycerolester enthalten - reines Polycarbonat oder Polycarbonat mit PETS - deutlich schlechtere Schmelze-Volumenfließraten MVR aufweisen.

Die Zusammensetzungen 5V bis 7V zeigen überraschenderweise neben der erheblichen Verbesserung der Schmelze-Volumenfließrate eine Erhöhung der Transmission und einen verringerten Yellowness-Index YI.

**Tabelle 2: Erfindungsgemäße Zusammensetzungen, enthaltend Triisooctylphosphat**

| Rezeptur: | | 8 | 9 | 10 |
|---|---|---|---|---|
| A-1 | Gew.-% | 93 | 93 | 93 |
| A-2 | Gew.-% | 6,79 | 6,59 | 6,39 |
| B | Gew.-% | 0,2 | 0,4 | 0,6 |
| D-2 | Gew.-% | 0,01 | 0,01 | 0,01 |
| | | | | |
| $\eta_{rel}$ Granulat | | 1,279 | 1,278 | 1,277 |
| $\eta_{rel}$ Prüfkörper | | 1,277 | 1,274 | 1,273 |
| MVR 7'/300 °C/1,2 kg | ml/10min | 20,8 | 29,5 | 52,6 |
| MVR 20'/300 °C/1,2 kg | ml/10min | 23,1 | 31,1 | 53,4 |
| Δ MVR 20'/MVR7' | | 2,3 | 1,6 | 0,8 |
| Vicat VSTB 50 | °C | 143,9 | 141,9 | 140,3 |
| Kerbschlagzähigkeit ISO 7391/180A (3 mm) | | | | |

(fortgesetzt)

| Rezeptur: | | 8 | 9 | 10 |
|---|---|---|---|---|
| bei RT | $kJ/m^2$ | 64 zäh | 65 zäh | 62 zäh |
| bei 0°C | $kJ/m^2$ | 57 zäh | 58 zäh | 61 zäh |
| Optik 4 mm | | | | |
| Transmission | % | 89,3 | 89,35 | 89,36 |
| Trübung | % | 0,44 | 0,39 | 0,38 |
| Y.I. | | 2,11 | 2,04 | 2,06 |

In Tabelle 2 sind zu erfindungsgemäßen Zusammensetzungen 8 bis 10 wichtige Eigenschaften angegeben. Im Vergleich mit den Beispielen 6V und 7V zeigt sich, dass die Schmelze-Volumenfließraten MVR bei den Triisooctylphosphat-haltigen Beispielen weiter erhöht sind.

Die erfindungsgemäßen Zusammensetzungen zeigen überraschenderweise neben der erheblichen Verbesserung der Schmelze-Volumenfließrate eine Verringerung der Trübung.

**Tabelle 3: Vergleichsbeispiele 11V bis 14V**

| | | **11V** | **12V** | **1V3** | **14V** |
|---|---|---|---|---|---|
| A-3 | Gew.-% | 100 | 99,9 | 99,8 | 99,7 |
| B | Gew.-% | | 0,1 | 0,2 | 0,3 |
| | | | | | |
| eta rel Granulat | | 1,257 | 1,255 | 1,256 | 1,255 |
| MVR 300°C/1,2 kg | $cm^3$/10min | 18,1 | 23,5 | 29,7 | 38,5 |
| Schmelzeviskosität bei 280°C | | | | | |
| eta 50 | Pa·s | | 402 | | |
| eta 100 | Pa·s | 485 | 400 | 281 | 182 |
| eta 200 | Pa·s | 472 | 395 | 277 | 175 |
| eta 500 | Pa·s | 415 | 354 | 253 | 170 |
| eta 1000 | Pa·s | 339 | 296 | 230 | 152 |
| eta 1500 | Pa·s | 285 | 252 | 212 | 136 |
| eta 5000 | Pa·s | 137 | 127 | 113 | 83 |
| Schmelzeviskosität bei 300°C | | | | | |
| eta 50 | Pa·s | - | - | - | - |
| eta 100 | Pa·s | - | - | - | - |
| eta 200 | Pa·s | 235 | 151 | 146 | 126 |
| eta 500 | Pa·s | 218 | 145 | 132 | 126 |
| eta 1000 | Pa·s | 195 | 137 | 126 | 118 |
| eta 1500 | Pa·s | 174 | 131 | 118 | 107 |
| eta 5000 | Pa·s | 95 | 82 | 76 | 72 |

**Tabelle 4: Erfindungsgemäße Zusammensetzungen und Vergleichsbeispiel 15V**

| **Rezeptur** | | **15V** | **16** | **17** |
|---|---|---|---|---|
| A-4 | Gew.-% | 100 | 99,8 | 99,6 |

(fortgesetzt)

| Rezeptur | | 15V | 16 | 17 |
|---|---|---|---|---|
| B | Gew.-% | | 0,2 | 0,4 |
| D-2)* | ppm | 100 | 100 | 100 |
| eta rel Granulat | | 1,272 | 1,270 | 1,269 |
| Schmelzeviskosität bei 280°C | | | | |
| eta 50 | Pa·s | 631 | 535 | 440 |
| eta 100 | Pa·s | 608 | 525 | 423 |
| eta 200 | Pa·s | 570 | 497 | 401 |
| eta 500 | Pa·s | 475 | 425 | 331 |
| eta 1000 | Pa·s | 370 | 308 | 242 |
| eta 1500 | Pa·s | 305 | 251 | 185 |
| eta 5000 | Pa·s | 143 | 120 | 85 |
| Schmelzeviskosität bei 300°C | | | | |
| eta 50 | Pa·s | 350 | 214 | 136 |
| eta 100 | Pa·s | 347 | 211 | 134 |
| eta 200 | Pa·s | 336 | 199 | 131 |
| eta 500 | Pa·s | 297 | 182 | 125 |
| eta 1000 | Pa·s | 250 | 161 | 115 |
| eta 1500 | Pa·s | 217 | 141 | 107 |
| eta 5000 | Pa·s | 115 | 85 | 70 |
| Schmelzeviskosität bei 320°C | | | | |
| eta 50 | Pa·s | 198 | 111 | 77 |
| eta 100 | Pa·s | 195 | 110 | 76 |
| eta 200 | Pa·s | 189 | 108 | 74 |
| eta 500 | Pa·s | 177 | 106 | 71 |
| eta 1000 | Pa·s | 158 | 99 | 67 |
| eta 1500 | Pa·s | 142 | 92 | 63 |
| eta 5000 | Pa·s | 85 | 61 | 50 |
| Vicat VSTB50 | °C | 143,8 | 143,3 | 142,2 |
| * die angegebenen Gew.-% von A-4 und B beziehen sich auf die Gesamtmengte von A-4 und B. D-2) wurde zusätzlich hinzugegeben. | | | | |

Die Zusammensetzungen, den im Sinne der Erfindung Diglycerolester zugegeben wurde, zeigen überraschend eine deutliche Verbesserung der Schmelzeviskosität, gemessen bei unterschiedlichen Scherraten.

## Patentansprüche

1. Verwendung mindestens eines Diglycerolesters in Kombination mit mindestens einem Phosphat zur Steigerung der Fließfähigkeit einer transparenten Polycarbonatzusammensetzung, wobei eine transparente Polycarbonatzusammensetzung im Bereich von 400 nm bis 800 nm eine Transmission von mindestens 86 % bestimmt nach ISO 13468 bei einer Dicke von 4 mm aufweist.

**2.** Verwendung nach Anspruch 1, **dadurch gekennzeichnet, dass** der Diglycerolester ein Ester der Formel (I) ist

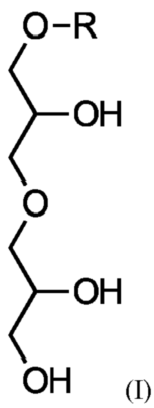

(I)

mit R = $COC_nH_{2n+1}$ und/oder R = COR',
wobei n eine ganze Zahl und R' ein verzweigter Alkylrest oder ein verzweigter oder unverzweigter Alkenylrest ist und $C_nH_{2n+1}$ ein aliphatischer, gesättigter linearer Alkylrest ist.

**3.** Verwendung nach Anspruch 2, **dadurch gekennzeichnet dass** R = $COC_nH_{2n+1}$ ist, wobei n eine ganze Zahl von 6-24, bevorzugt 8 bis 18, weiter bevorzugt 10 bis 16, besonders bevorzugt 12 ist.

**4.** Verwendung nach einem der vorhergehenden Ansprüche, **dadurch gekennzeichnet, dass** die Polycarbonatzusammensetzung nach Zugabe des Diglycerolesters und des Phosphats

A) 20,0 Gew.-% bis 99,0 Gew.-% aromatisches Polycarbonat,
B) 0,01 Gew.-% bis 3,0 Gew.-% Diglycerolester und
C) 0,0 Gew.-% bis 1,0 Gew.-% Thermostabilisator

enthält.

**5.** Verwendung nach einem der Ansprüche 1 bis 3, **dadurch gekennzeichnet, dass** die Polycarbonatzusammensetzung nach Zugabe des Diglycerolesters und Phosphat die folgenden Bestandteile umfasst:

A) 95,0 Gew.-% bis 99,0 Gew.-% aromatisches Polycarbonat,
B) 0,01 Gew.-% bis 3,0 Gew.-% Diglycerolester und
C) optional bis zu 1,0 Gew.-% Thermostabilisator und
D) bis zu 3,0 Gew.-% ein oder mehrere weitere Additive aus der Gruppe der Antioxidantien, UV-Absorber, IR-Absorber, Antistatika, optischen Aufheller, Lichtstreumittel, Farbmitteln aus der Gruppe der organischen Pigmente, der anorganischen Pigmente, Ruß und/oder Farbstoffe sowie der anorganischen Füllstoffe Titandioxid, Bariumsulfat und/oder der Additive zur Lasermarkierung und, wobei als Additiv mindestens 0,001 bis 0,1 Gew.-% Phosphat enthalten sind,

wobei die Komponenten A) bis D) sich zu 100 Gew.-% addieren.

**6.** Verwendung nach Anspruch 4 oder 5, **dadurch gekennzeichnet, dass** die Menge des Diglycerolesters 0,2 bis 1,0 Gew.-% beträgt.

**7.** Verwendung nach Anspruch 4 oder 5, **dadurch gekennzeichnet, dass** die Menge des Diglycerolesters 0,3 bis 0,6 Gew.-% beträgt.

**8.** Verwendung nach einem der vorhergehenden Ansprüche, **dadurch gekennzeichnet, dass** die Schmelzeviskosität, bestimmt nach ISO 11443, in den Polycarbonatzusammensetzungen durch den Diglycerolester reduziert wird.

**9.** Verwendung nach einem der vorhergehenden Ansprüche, **dadurch gekennzeichnet, dass** das mindestens eine Phosphat Triisooctylphosphat ist.

## Claims

1. Use of at least one diglycerol ester in combination with at least one phosphate for enhancing the flowability of a transparent polycarbonate composition, wherein a transparent polycarbonate composition exhibits a transmission, determined to ISO 13468 for a thickness of 4 mm, of at least 86% in the range from 400 nm to 800 nm.

2. Use according to Claim 1, **characterized in that** the diglycerol ester is an ester of formula (I)

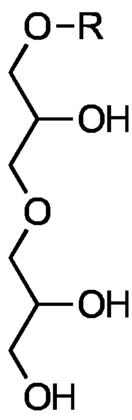

(I)

where R = $COC_nH_{2n+1}$ and/or R = COR',
wherein n is an integer and R' is a branched alkyl radical or a branched or unbranched alkenyl radical and $C_nH_{2n+1}$ is an aliphatic, saturated linear alkyl radical.

3. Use according to Claim 2, **characterized in that** R = $COC_nH_{2n+1}$, wherein n is an integer of 6-24, preferably 8 to 18, more preferably 10 to 16, particularly preferably 12.

4. Use according to any of the preceding claims, **characterized in that** after addition of the diglycerol ester and the phosphate the polycarbonate composition comprises

   A) 20.0 wt% to 99.0 wt% of aromatic polycarbonate,
   B) 0.01 wt% to 3.0 wt% of diglycerol ester and
   C) 0.0 wt% to 1.0 wt% of heat stabilizer.

5. Use according to any of Claims 1 to 3, **characterized in that** after addition of the diglycerol ester and the phosphate the polycarbonate composition comprises the following constituents:

   A) 95.0 wt% to 99.0 wt% of aromatic polycarbonate,
   B) 0.01 wt% to 3.0 wt% of diglycerol ester and
   C) optionally up to 1.0 wt% of heat stabilizer and
   D) up to 3.0 wt% of one or more further additives from the group of antioxidants, UV absorbers, IR absorbers, antistatics, optical brighteners, light-scattering agents, colorants from the group of organic pigments, inorganic pigments, carbon black and/or dyes and the inorganic fillers titanium dioxide, barium sulphate and/or additives for laser marking and wherein at least 0.001 to 0.1 wt% of phosphate is present as additive,

   wherein the components A) to D) sum to 100 wt%.

6. Use according to Claim 4 or 5, **characterized in that** the amount of the diglycerol ester is from 0.2 to 1.0 wt%.

7. Use according to Claim 4 or 5, **characterized in that** the amount of the diglycerol ester is from 0.3 to 0.6 wt%.

8. Use according to any of the preceding claims, **characterized in that** the melt viscosity of the polycarbonate compositions determined to ISO 11443 is reduced by the diglycerol ester.

9. Use according to any one of the preceding claims, **characterized in that** the at least one phosphate is triisooctyl

phosphate.

## Revendications

1. Utilisation d'au moins un ester de diglycérol en combinaison avec au moins un phosphate pour augmenter la fluidité d'une composition de polycarbonate transparente, une composition de polycarbonate transparente présentant dans la plage allant de 400 nm à 800 nm une transmission d'au moins 86 %, déterminée selon ISO 13468 à une épaisseur de 4 mm.

2. Utilisation selon la revendication 1, **caractérisée en ce que** l'ester de diglycérol est un ester de la formule (I) :

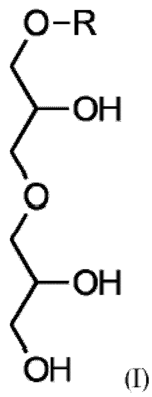
(I)

avec R = $COC_nH_{2n+1}$ et/ou R = COR',
n étant un nombre entier et R' étant un radical alkyle ramifié ou un radical alcényle ramifié ou non ramifié, et $C_nH_{2n+1}$ étant un radical alkyle linéaire saturé aliphatique.

3. Utilisation selon la revendication 2, **caractérisée en ce que** R = $COC_nH_{2n+1}$, n étant un nombre entier de 6 à 24, de préférence de 8 à 18, de manière davantage préférée de 10 à 16, de manière particulièrement préférée de 12.

4. Utilisation selon l'une quelconque des revendications précédentes, **caractérisée en ce que** la composition de polycarbonate contient après l'ajout de l'ester de diglycérol et du phosphate :

   A) 20,0 % en poids à 99,0 % en poids d'un polycarbonate aromatique,
   B) 0,01 % en poids à 3,0 % en poids d'un ester de diglycérol, et
   C) 0,0 % en poids à 1,0 % en poids d'un thermostabilisateur.

5. Utilisation selon l'une quelconque des revendications 1 à 3, **caractérisée en ce que** la composition de polycarbonate comprend les constituants suivants après l'ajout de l'ester de diglycérol et du phosphate :

   A) 95,0 % en poids à 99,0 % en poids d'un polycarbonate aromatique,
   B) 0,01 % en poids à 3,0 % en poids d'un ester de diglycérol, et
   C) éventuellement jusqu'à 1,0 % en poids d'un thermostabilisateur, et
   D) jusqu'à 3,0 % en poids d'un ou de plusieurs additifs supplémentaires du groupe constitué par les antioxydants, les absorbeurs UV, les absorbeurs IR, les antistatiques, les azurants optiques, les agents de diffusion de la lumière, les agents colorants du groupe constitué par les pigments organiques, les pigments inorganiques, le noir de carbone et/ou les colorants, ainsi que les charges inorganiques dioxyde de titane, sulfate de baryum et/ou les additifs pour le marquage laser, au moins 0,001 à 0,1 % en poids de phosphate étant contenu en tant qu'additif,

   la somme des composants A) à D) étant de 100 % en poids.

6. Utilisation selon la revendication 4 ou 5, **caractérisée en ce que** la quantité de l'ester de diglycérol est de 0,2 à 1,0 % en poids.

7. Utilisation selon la revendication 4 ou 5, **caractérisée en ce que** la quantité de l'ester de diglycérol est de 0,3 à 0,6 % en poids.

8. Utilisation selon l'une quelconque des revendications précédentes, **caractérisée en ce que** la viscosité à l'état fondu, déterminée selon ISO 11443, dans les compositions de polycarbonate est réduite par l'ester de diglycérol.

9. Utilisation selon l'une quelconque des revendications précédentes, **caractérisée en ce que** ledit au moins un phosphate est le phosphate de triisooctyle.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- JP 2011108435 A
- JP 2010150457 A
- JP 2010150458 A
- JP 2009292962 A
- JP 2011256359 A
- EP 0994155 A
- US 3028635 A
- US 2999825 A
- US 3148172 A
- US 2991273 A
- US 3271367 A
- US 4982014 A
- US 2999846 A
- DE 1570703 A
- DE 2063050 A
- DE 2036052 A
- DE 2211956 A
- DE 3832396 A
- FR 1561518 A
- JP 61062039 A
- JP 61062040 A
- JP 61105550 A
- EP 0839623 A
- WO 9615102 A
- EP 0500496 A


### In der Beschreibung aufgeführte Nicht-Patentliteratur


- Chemistry and Physics of Polycarbonates. **SCHNELL.** Polymer Reviews. Interscience Publishers, 1964, vol. 9
- Polycarbonates. **D. FREITAG ; U. GRIGO ; P.R. MÜLLER ; H. NOUVERTNÉ ; BAYER AG.** Encyclopedia of Polymer Science and Engineering. 1988, vol. 11, 648-718
- Polycarbonate. **U. GRIGO ; K. KIRCHNER ; P.R. MÜLLER.** Becker/Braun, Kunststoff-Handbuch, Band 3/1, Polycarbonate, Polyacetale, Polyester, Celluloseester. Carl Hanser Verlag, 1992, vol. 3/1, 117-299
- **H. SCHNELL.** Chemistry and Physics of Polycarbonates. Interscience Publishers, 1964
- Plastics Additives Handbook. Hans Zweifel. Hanser Verlag, 2000
- *CHEMICAL ABSTRACTS,* 23949-66-8